(19)

Europäisches
Patentamt
European
Patent Office
Office européen
des brevets

(11) **EP 1 881 454 A1**

(12) **EUROPEAN PATENT APPLICATION**

(43) Date of publication:
**23.01.2008 Bulletin 2008/04**

(51) Int Cl.:
**G06T 7/20** $^{(2006.01)}$

(21) Application number: **06014801.2**

(22) Date of filing: **17.07.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Mitsubishi Electric Information Technology Centre**
**Europe B.V.**
**The Surrey Research Park**
**Guildford**
**Surrey GU2 7YD (GB)**
Designated Contracting States:
**GB**
• **MITSUBISHI DENKI KABUSHIKI KAISHA**
**Chiyoda-ku, Tokyo 100-8310 (JP)**
Designated Contracting States:
**AT BE BG CH CY CZ DE DK EE ES FI FR GR HU IE IS IT LI LT LU LV MC NL PL PT RO SE SI SK TR**

(72) Inventor: **O'Callaghan, Robert James**
**Guildford GU2 4LD (GB)**

(74) Representative: **HOFFMANN EITLE**
**Patent- und Rechtsanwälte**
**Arabellastrasse 4**
**81925 München (DE)**

(54) **Image processing for change detection**

(57)    Image data defining a reference image and each input image in a sequence of images is processed to detect changes in the images. A value is calculated for each pixel defining the spatial rate of change of homogeneity of the image data at that pixel. Different regions of pixels in each image are selected and the values within each region are concatenated to define a vector for each region. The vectors are then processed to compare corresponding regions in each image. The results of the comparison define a correlation map identifying areas in the images in which change has occurred.

START

SELECT NEXT INPUT IMAGE FROM SEQUENCE — S2-2

GENERATE REPRESENTATIVE REGION VALUES FOR THE REFERENCE IMAGE AND THE INPUT IMAGE — S2-4

COMPARE THE REPRESENTATIVE REGION VALUES FROM CORRESPONDING REGIONS OF THE REFERENCE IMAGE AND THE INPUT IMAGE TO GENERATE A CORRELATION MAP — S2-6

PROCESS THE CORRELATION MAP TO DETECT DIFFERENCES BETWEEN THE IMAGES — S2-8

ANOTHER INPUT IMAGE? — S2-10
YES
NO

END

FIG. 2

EP 1 881 454 A1

## Description

The present invention relates to the field of image processing, and more particularly to the processing of image data defining a sequence of images to detect change in the images, especially (but not exclusively) motion of an object. The detection of such change may then be used, for example, to segment image data relating to the change from the other image data and/or to control external apparatus and processes.

Identifying changes between different images of the same scene is a fundamental operation in many computer vision applications. In some applications, such as satellite imaging, the task is to detect changes over relatively long timescales (e.g., observing the effects of erosion or construction on the landscape, or identifying changes in agricultural land-use). In video analysis, by contrast, the goal may be to detect changes over short timescales. In the case that changes are measured between closely-spaced frames in a video sequence, one of the problems is to detect motion of objects in the scene.

Closed circuit television (CCTV) video surveillance is an example of an application where the volume of video data captured is usually far greater than the capacity for manual viewing and analysis. In most scenarios there are far more cameras than monitors - let alone human operators

- in the control room. The other notable characteristic is that a large proportion of this video data is uninteresting
- the field of view of a camera may be empty or unchanging for long periods, or the operator may only be interested in monitoring certain types of activity.

For these reasons, it is of significant practical benefit to perform some automated analysis of the image sequences. By implementing appropriate computer vision algorithms, uninteresting video can be discarded or, conversely, events of interest can be highlighted for the attention of human operators. In this way, the visual information can be managed more efficiently and effectively.

One fundamental analysis function for surveillance video is the detection and localisation of motion. By itself, a motion detector can alert the operator to activity in a scene or trigger recording of the video stream. Further, if the position of the moving object(s) within the video frame can be localised, then the system can test for more complex events, such as intrusion into a particular zone. Motion segmentation is also an important basis for further analysis: object tracking algorithms may be initialised from the detected objects or their attributes measured to compare with historical data.

It should be noted that such dynamic object motion is not the only type of change in a video sequence which may be of interest. Over a period of minutes or hours, for instance, it may be desirable to detect the arrival or departure of otherwise static objects in the scene. Accordingly, the term "motion" as used herein is used to encompass both such scenarios and other similar scenarios as well. If a full-rate video sequence is available, this could be accomplished by a combination of motion detection and frame-by-frame object tracking. However, if changes can be measured directly over the longer time-base, the same result can be achieved much more simply, by direct comparison of two frames. Furthermore, many of the algorithms for motion analysis and object tracking depend on an assumption of small (incremental) motion of objects between consecutive frames, which is not always satisfied - as, for example, in the case of time-lapse video recording.

A variety of methods have previously been proposed to detect change in image sequences. These methods and their disadvantages are summarized below.

### Background Subtraction

One known method is the idea of subtracting a reference or "background" image from the current frame - i.e., frame differencing or background subtraction. In the most basic application of this approach, the reference image at each point in time is simply the previous frame. More complex background models can lead to improved performance: various methods have been proposed, which integrate the history of previous frames, including linear and non-linear filtering, prediction and statistical modelling. A review and evaluation of several of these is given by Cheung and Kamath (Sen-Ching S. Cheung and Chandrika Kamath, "Robust techniques for background subtraction in urban traffic video", IS&T/SPIE's Symposium on Electronic Imaging, San Jose, CA, United States January 18-22, 2004.)

One of the best known methods using background subtraction is the "Mixture of Gaussians" background model, due to Stauffer and Grimson (C. Stauffer and W.E.L. Grimson, "Adaptive background mixture models for real-time tracking", Proc. IEEE Conf. on Computer Vision and Pattern Recognition, p. 246-252, 1999). In this algorithm, a statistical model of background intensity/colour is built for each pixel. This is expressed as a mixture model of a small number of Gaussian distributions. Each Gaussian is characterised by mean and standard deviation. Then, for each new frame, each pixel is compared to every component in its mixture model and a match declared if it lies within 2.5 standard deviations of the mean. The parameters of the model for each pixel are then updated, before proceeding to the next frame.

Another multi-modal background model is used in the "W4" system, from Haritaoglu et al. (Ismail Haritaoglu, David Harwood, and Larry S. Davis, "W4: Real-Time Surveillance of People and Their Activities", IEEE Trans. on Pattern Analysis and Machine Intelligence, Vol. 22, No. 8, p 809-830, Aug. 2000). In this case, a training period is first used to learn the background model from stationary pixels in the video sequence. This model is characterised by the minimum, maximum and maximum-difference values over the training period.

Gradient methods

Javed et al. (Omar Javed, Khurram Shafique and Mubarak Shah, "A Hierarchical Approach to Robust Background Subtraction using Color and Gradient Information", Proc. IEEE Workshop on Motion and Video Computing, Orlando, Dec. 5-6, 2002) combine colour and edge-based background subtraction. They build Gaussian models not only of the pixel colour statistics but also of the gradient magnitude and direction.

Neighbourhood Change Detection

Several authors have observed that the pixel-wise subtraction approach, although useful, has a number of drawbacks - especially in the context of changing scene illumination. In response, they have proposed a variety of local, neighbourhood-based methods.

Durucan and Ebrahimi (Emrullah Durucan and Touradj Ebrahimi, "Change Detection and Background Extraction by Linear Algebra", Proc. of the IEEE, Vol. 89, No. 10, p 1368-1381, Oct. 2001) propose to model each pixel by concatenating pixel values in the surrounding neighbourhood into a vector. To measure change between two such vectors, the authors develop two different measures to assess whether they are linearly independent. The underlying assumption is that changing illumination can be modelled by linear scaling of the vectors, so that measuring the degree of linear independence will be more robust to such changes than simple subtraction.

Nagaya *et al.* (US2002/0030739) propose a similar method. They construct a vector from a "slit" or linear slice of pixels in an image and observe that illumination changes will modify the magnitude of this vector, but not its direction. They therefore define a normalised vector distance, in which the vectors are first projected onto the unit sphere, and then compared. This distance is invariant to scaling and hence the algorithm should be robust to illumination change. Aoki et al. (US2001/0004400) construct their vectors from blocks of pixels and note that an equivalent normalised distance can be calculated by using the inner product to directly measure the angle between two vectors.

Matsuyama *et al.* (Takashi Matsuyama, Takashi Ohya and Hitoshi Habe, "Background Subtraction for Non-Stationary Scenes", Proc. 4th Asian Conference on Computer Vision, p. 662-667, 2000) further develop the concept of normalised vector distance, by recording spatial and temporal statistics of the distance values. In so doing, they aim to better adapt the decision function to the content of the image sequence.

Kondo et al. (US2005/0259870) use normalised correlation to compare vectors of pixel values in a neighbourhood. This kind of distance measure achieves invariance not only to linear scaling, but also to additive factors between the two images under consideration.

Li and Leung (Liyuan Li and Maylor K. H. Leung, "Integrating Intensity and Texture Differences for Robust Change Detection", IEEE Trans. Image Processing, Vol. 11, No. 2, pp. 105-112, February 2002) combine the concept of neighbourhood-based comparison with the use of image gradients, to measure differences in image texture. However, the distance function proposed in their paper remains susceptible to changes in illumination (as modelled by linear scaling).

Illumination Compensation

Bassman et al. (US6044166) also model illumination change by linear scaling of pixel values. However, they treat it as a global effect and hence estimate the scaling factor and offset over the whole frame. These parameters are used to modify the reference image to compensate for the change, before performing regular pixel-wise subtraction.

It is very important that automated visual analysis algorithms are robust to a wide range of environmental variations encountered in real scenes. This is particularly true in security-critical applications such as visual surveillance. The system must be able to distinguish between events (and potential threats) of interest and image changes due to benign variations. Changing lighting conditions are one example of such benign, but ubiquitous variation.

Many of the prior-art change detection algorithms cited above are sensitive, to a greater or lesser extent, to changing illumination. The pixel-based background subtraction methods will produce false alarms as they will interpret the intensity and colour changes detected as evidence of motion. Of the methods which attempt to normalise or compensate for illumination change, most are based on linear models of intensity change - either in a local neighbourhood or globally across the image. The global assumption quickly breaks down in natural, complex scenes: it is rare for a three-dimensional scene to have either uniform illumination or uniform changes in illumination throughout. The local assumption may hold in some parts of the image, such as across a single object or surface but inevitably, in the presence of inter-reflection, shadowing and inhomogeneous illumination, there will be discontinuities (object boundaries or illumination boundaries) across which the linear model will fail.

The prior art techniques therefore suffer from many problems, and in particular:

- The so-called "aperture problem" (described in further detail later), encountered by local-neighbourhood methods, in which the interior of a moving region of uniform intensity cannot be detected over a uniform background, because the difference can be modelled by a local illumination change.

- The need to maintain complex background models.

- The dependence on the background update mechanism to absorb the effects of illumination variation - in practice, the methods based on background subtraction distinguish between object motion and other changes based on the dynamics. Fast illumination changes and slowly moving objects therefore cause errors.

The present invention aims to address at least one of the problems of the prior art detection methods.

According to the present invention, there is provided an image processing apparatus and method in which image data defining a first image and a second image is processed to detect differences between the images by:

calculating a value for each pixel in the first image representing the rate at which the pixel values in the first image change at that pixel;

calculating a value for each pixel in the second image representing the rate at which the pixel values in the second image change at that pixel;

combining the calculated values in different regions of the first image to generate a respective representative value for each region;

combining the calculated values in different regions of the second image to generate a respective representative value for each region;

comparing the representative values for corresponding regions of the first and second images; and

identifying differences between the images in dependence upon the comparison results.

Preferably, the regions have different sizes, with the sizes being the same in the first and second images. This allows the detection of differences to be carried out at a plurality of scales and addresses the "aperture problem" mentioned above.

Preferably, the comparison of the representative values is carried out in a linearly invariant comparison process which yields the same comparison result when representative value R1 is compared with representative value R2 and when R1 is compared with $\alpha$R2, $\alpha$ being a linear scaling factor. In this way, the comparison can differentiate between differences caused by changes in illumination and differences caused by movement of an object.

The representative values may be generated using non-signed values defining the rate at which the pixel values change. This use of non-signed values has the advantage that the representative values are independent of the direction of change of the pixel values within the images so that changes in direction caused by illumination variations are nullified.

Alternatively, the problem of illumination variations causing changes in the direction of change of the pixel values can be addressed by comparing the representative values to generate a non-signed comparison result.

The calculated values in each region may be weighted relative to each other to enable differences between the images to be located more accurately.

One of the images may be processed together with at least one further image to generate the representative region values for comparison with the representative region values of the other image. For example the calculated values representing the rate at which the pixel values change may be combined for different images to generate a combined value for each pixel (for example by taking a median of the values for pixels at the same position). Representative region values may then be generated from the combined values. This enables a background model to be synthesised independent of illumination conditions and moving objects.

The present invention also provides a computer program product, such as a storage medium storing computer program instructions or a signal carrying computer program instructions, to program a programmable processing apparatus to become configured as an apparatus as set out above or to become operable to perform a method as set out above.

An embodiment of the invention uses partial derivatives of image pixel values (such as intensity values or red, green and blue values) to detect changes in images in a way which is substantially invariant to illumination.

An embodiment of the invention detects and segments object motion by detection of changes in gradient structure, between a reference image and an input image. This approach yields a number of side-benefits: for example, a simple but powerful background model can be advantageously constructed in the gradient-domain.

In an embodiment, structure change is measured over neighbourhoods of varying sizes. This allows the embodiment to deal equally effectively with objects of different sizes, at different distances from the camera and also to address the aperture problem, as mentioned above.

An embodiment of the present invention provides a flexible model of illumination change for real-world scenes in order to improve robustness to such change.

An embodiment of the invention achieves robust change detection through a series of computationally simple processes, in order to provide maximum efficiency as well as accuracy.

Embodiments of the invention will now be described, by way of example only, with reference to the accompanying drawings, in which:

Figure 1 schematically shows the components of a first embodiment of the invention, together with the notional functional processing units into which the processing apparatus component may be thought of as being configured when programmed by computer program instructions;

Figure 2 shows the processing operations performed by the processing apparatus in Figure 1;

Figure 3 shows the processing operations performed at step S2-4 in Figure 2;

Figures 4a and 4b show an example to illustrate the effect of changing lighting conditions;

Figures 5a and 5b show an example to illustrate the reasons for selecting regions of different sizes in the processing at steps S3-6a and S3-6b;

Figure 6 illustrates a process performed in the first embodiment at step S2-6 to compare representative region values;

Figures 7a, 7b and 7c illustrate the allocation of correlation values within a correlation map in the processing at step S2-6; and

Figure 8 illustrates a process performed in a second embodiment at step S2-6 to compare representative region values.

<u>First Embodiment</u>

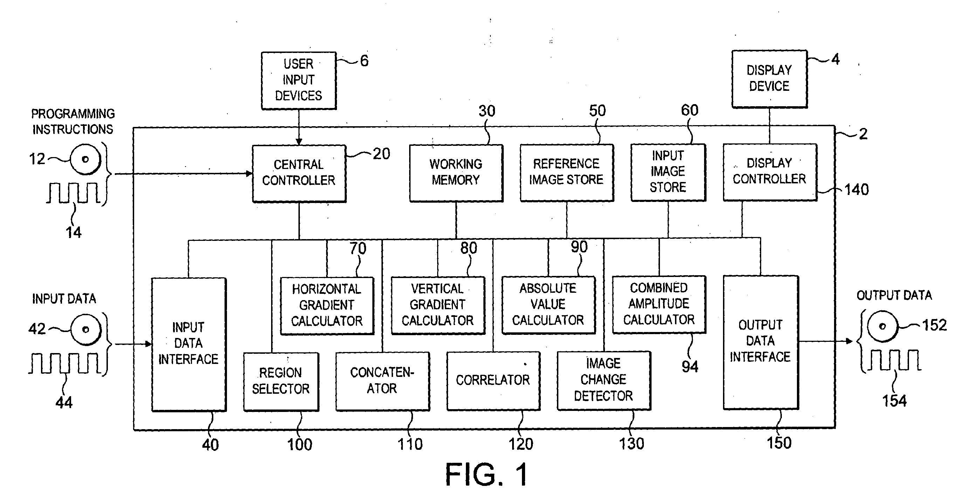

Referring to Figure 1, an embodiment of the invention comprises a programmable processing apparatus 2, such as a personal computer (PC), containing, in a conventional manner, one or more processors, memories, graphics cards etc, together with a display device 4, such as a conventional personal computer monitor, and user input devices 6, such as a keyboard, mouse etc.

The processing apparatus 2 is programmed to operate in accordance with programming instructions input, for example, as data stored on a data storage medium 12 (such as an optical CD ROM, semiconductor ROM, magnetic recording medium, etc), and/or as a signal 14 (for example an electrical or optical signal input to the processing apparatus 2, for example from a remote database, by transmission over a communication network (not shown) such as the Internet or by transmission through the atmosphere), and/or entered by a user via a user input device 6 such as a keyboard.

As will be described in more detail below, the programming instructions comprise instructions to program the processing apparatus 2 to become configured to compare each image in a sequence of images of a scene with a reference image, to determine if a change has occurred between them. This comparison method operates by examining the image structure in corresponding regions within the two images and assessing whether the differences could be explained by a variation in illumination. If there are differences which cannot be explained as such, then a significant change is deemed to have occurred.

When programmed by the programming instructions, processing apparatus 2 can be thought of as being configured as a number of functional units for performing processing operations. Examples of such functional units and their interconnections are shown in FIG. 1. The units and interconnections illustrated in FIG. 1 are, however, notional, and are shown for illustration purposes only to assist understanding; they do not necessarily represent units and connections into which the processor, memory etc of the processing apparatus 2 actually become configured.

Referring to the functional units shown in Figure 1, central controller 20 is operable to process inputs from the user input devices 6, and also to provide control and processing for the other functional units. Working memory 30 is provided for use by central controller 20 and the other functional units.

Input data interface 40 is operable to control the storage of input data within processing apparatus 2. The data may be input to processing apparatus 2 for example as data stored on a storage medium 42 or as a signal 44 transmitted to the processing apparatus 2. In this embodiment, the input data comprises data defining a reference image of a scene in which change is to be detected and a sequence of images of the scene which are to be processed in real time to detect change relative to the reference image.

Reference image store 50 is provided to store the image data of the reference image and other data derived therefrom when the reference image data is processed. Similarly, input image store 60 is provided to store the image data of each image in the sequence and data derived therefrom in subsequent processing.

Horizontal gradient calculator 70 and vertical gradient calculator 80 are operable to process image data of the reference image and each input image in the sequence of images to calculate horizontal and vertical gradient components respectively for each pixel therein.

Absolute value calculator 90 is operable to calculate an absolute value (that is magnitude or amplitude independent of sign) of the gradient components calculated by the horizontal and vertical gradient calculators 70, 80.

Combined amplitude calculator 94 is operable to process the horizontal and vertical gradient components to calculate a combined gradient amplitude value for each pixel in an image.

Region selector 100 is operable to select regions from the images of absolute values generated by absolute value calculator 90. In this embodiment, region selector 100 is operable to select regions of different sizes and regions at different positions within the images.

Concatenator 110 is operable to concatenate the absolute values within a set of corresponding regions selected by region selector 100 to generate a respective representative region value for each set of corresponding regions.

Correlator 120 is operable to compare the representative region values generated by concatenator 110 for corresponding regions of the reference image and an input image to generate a correlation map.

Image change detector 130 is operable to process the correlation map generated by correlator 120 to detect therefrom differences between the reference image and the input image being compared with the reference image.

Display controller 140, under the control of central controller 20, is operable to control display device 4 to display image data thereon. The image data may comprise, for example, the reference image and sequence of input images input to processing apparatus 2 and/or the results of the processing by processing apparatus 2 (for example an input image marked to identify regions in which change was detected).

Output data interface 150 is operable to control the output of data from processing apparatus 2. In this embodiment, the output data defines the regions of the input image in which change was detected or may simply comprise a signal indicating that change was detected. Output data interface 150 is operable to output the data for example as data on a storage medium 152 (such as an optical CD ROM, semiconductor ROM, magnetic recording medium, etc), and/or as a signal 154 (for example an electrical or optical signal transmitted over a communication network such as the Internet or through the atmosphere). A recording of the output data may be made by recording the output signal 154 either directly or indirectly (for example by making a first recording as a "master" and then making a subsequent recording from the master or from a descendent recording thereof) using a recording apparatus (not shown).

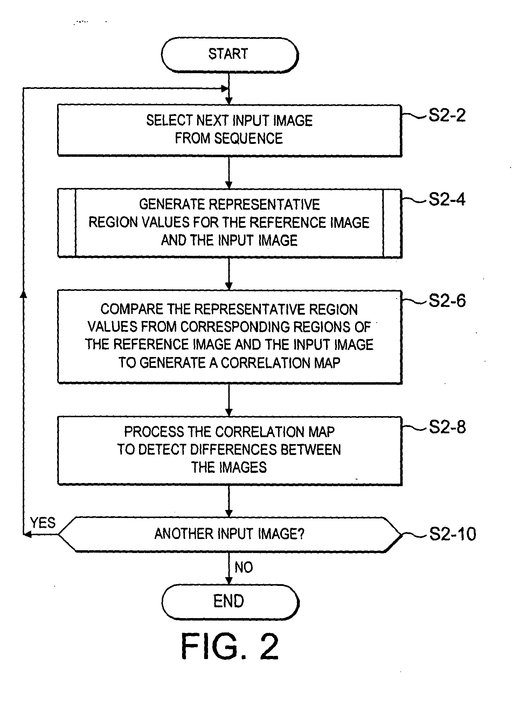

Figure 2 shows the processing operations performed by processing apparatus 2 to process input data in this embodiment. In this embodiment, the processing is performed in real time as the input images are received by processing apparatus 2. However, as the skilled person will appreciate, the sequence of input images may be stored in processing apparatus 2 and processed in non-real-time instead.

Referring to Figure 2, at step S2-2, the next input image is selected for processing (this being the first input image the fist time step S2-2 is performed).

At step S2-4, processing is performed to generate representative region values for the reference image stored in reference image store 50 and the input image selected at step S2-2.

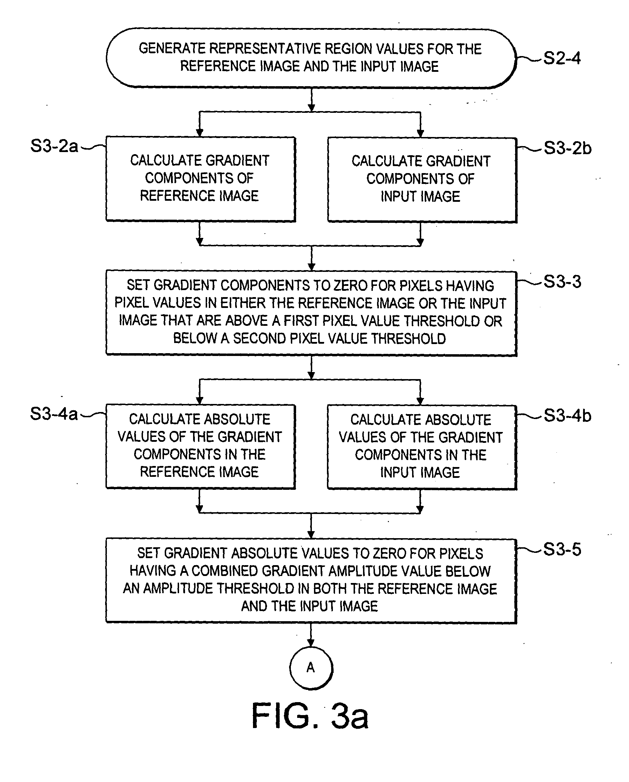

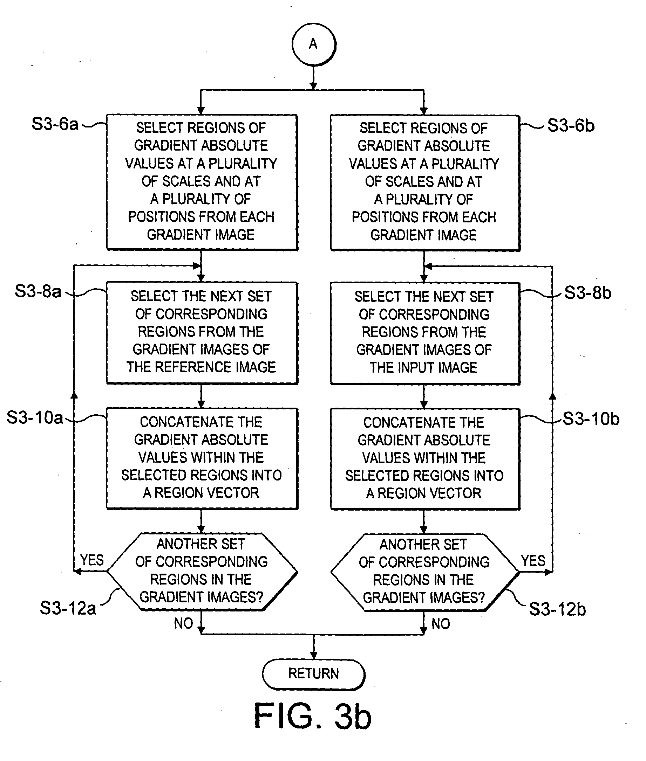

Figure 3 shows the processing operations performed in this embodiment at step S2-4. Certain processes are carried out separately on the reference image and the input image. These processes are designated in Figure 3 by a step number ending in "a" for reference image processes and "b" for input image processes. Where the processing is the same for both the reference image and the input image, the description below describes the processing using the generic term "image" to refer to both.

Referring to Figure 3, the first stage in the processing is the calculation of spatial derivative components of the pixel values in the reference image (step S3-2a) and the input image (step S3-2b) defining the spatial rate of change of homogeneity of the image data in each of these images. This processing is the same in both steps S3-2a and S3-2b, and consists of estimating partial derivatives of the image functions for the image. The derivatives may be estimated in the manner most appropriate to each particular application. In this embodiment, horizontal and vertical gradients are calculated as the partial derivatives. However, as will be apparent to one skilled in the art, gradients at different orientations (whether mutually orthogonal or not) may be substituted when appropriate. Furthermore, different types of derivatives may be calculated as described later.

In this embodiment, horizontal gradient calculator 70 and vertical gradient calculator 80 perform the horizontal and vertical gradient calculations at steps S3-2a and S3-2b using a Sobel operator. The Sobel filter coefficients are:

$$\begin{bmatrix} -1 & 0 & 1 \\ -2 & 0 & 2 \\ -1 & 0 & 1 \end{bmatrix} \text{ and } \begin{bmatrix} -1 & -2 & -1 \\ 0 & 0 & 0 \\ 1 & 2 & 1 \end{bmatrix}$$

for the horizontal and vertical directions, respectively. These filters may be advantageously implemented via separable filtering with the coefficients [1 0 -1] in the direction corresponding to the gradient and the coefficients [1 2 1] in the transverse direction. Note that the invention is not limited to this choice of operator - as will be well known to one skilled in the art, many other discrete differentiation approximations exist, which could be used in place of the Sobel filter. Similarly, the size of the gradient operator is not limited to that of the presently described embodiment.

In this embodiment, the gradient of image intensity is computed. However, the gradients of other pixel values, such as image colour components, may also be computed. For example, the derivatives of the red, green and blue colour components may be computed.

As a result of the processing at step S3-2a, two gradient images are generated for the reference image - one containing a respective horizontal gradient value for each pixel, and one containing a respective vertical gradient value for each pixel. Similarly two gradient images are generated at step S3-2b for the input image. (If gradients of R, G, B colour components were calculated then six gradient images would result for each image - a horizontal and a vertical gradient image for each colour component.)

The processing at step S3-3 is an optional process, in which pixels whose values in either the reference image or the input image are at, or close to, the extremes of the dynamic range for the pixel values are identified and processed so that they are ignored in subsequent processing. For example, for pixel values in the range [0, 255], pixels with intensity greater than a first threshold value (for example 250) and pixels with intensity less than a second threshold value (for example 5) in either the reference image or the input image might be ignored. This is beneficial in the case that a change in illumination causes clipping/saturation in one of the images - detail which is absent from the clipped image but present in the unclipped image may cause a change to be falsely detected, in the subsequent correlation processing (described below). In this embodiment, when a pixel of this kind is identified, the corresponding gradient values for the pixel are set to zero in both of the gradient images generated at step S3-2a and both of the gradient images generated at step S3-2b. In this way a pixel having an intensity above the first threshold or below the second threshold in either the reference image or an input image is ignored in subsequent processing by setting its gradient components to zero in all four gradient images (the two from the reference image and the two from the input image).

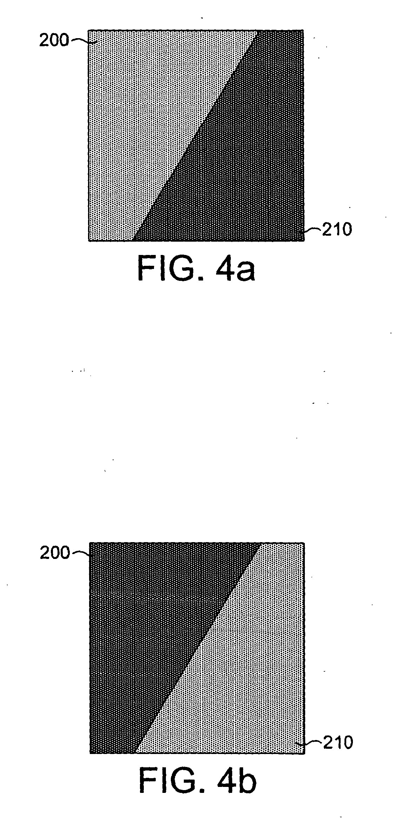

At steps S3-4a and S3-4b, processing is performed to remove the sign (that is, the plus or minus sign) of each gradient value calculated at steps S3-2a and S3-2b to convert each value to a non-signed value. In this embodiment, this is effected by absolute value calculator 90 calculating the absolute value (that is the amplitude or magnitude independent of sign) of each gradient value calculated at steps S3-2a and S3-2b. The reason for this processing is that the polarity (positivity or negativity) of gradient features may change according to illumination conditions - for example, if the prevailing direction of illumination changes. This effect is illustrated in Figures 4a and 4b, which show the anticipated effect of a change in lighting conditions along one edge of an ideal object in a small window. In Figure 4a, the first face 200 is illuminated and the second face 210 is in shadow. In Figure 4b the situation is reversed, with the first face 200 in shadow and second face 210 in light. The vertical and horizontal gradient components along this edge will be reversed in polarity (sign), but their ratio will be the same. To understand why, note that the ratio of horizontal and vertical derivatives encodes the direction of the edge, which is unaffected by the change in lighting. As will be explained later, the comparison function used in this embodiment for image blocks is invariant to effects that preserve the ratio of the gradient amplitude components. Therefore, for the images in Figures 4a and 4b, an illumination change, rather than a structure change, will be judged to have occurred.

As a result of the processing at step S3-4a, two gradient images storing a non-signed gradient value (an absolute gradient value in this embodiment) for each pixel are generated for the reference image. Similarly two gradient images storing a non-signed gradient value for each pixel are generated at step S3-4b for the input image.

The processing at step S3-5 is an optional process. In this processing, the gradient images generated at step S3-4a for the reference image are processed to calculate a combined gradient amplitude value for each pair of corresponding pixels in the gradient images (that is, pixels having the same positions in the horizontal and vertical gradient images). Similarly, the gradient images generated at step S3-4b for the input image are processed to calculate a combined gradient amplitude value for each pair of corresponding pixels in those gradient images. Pixels which have a combined gradient amplitude value below an amplitude threshold in both the reference image and the input image are identified and processed so that they are ignored in subsequent processing.

More particularly, in this embodiment, a combined gradient amplitude value $|\nabla f|$ is calculated for each pair of pixels at the same position in a horizontal gradient image and a vertical gradient image by combined amplitude calculator 94 as follows:

$$|\nabla f| = \sqrt{\left(\frac{\partial f}{\partial x}\right)^2 + \left(\frac{\partial f}{\partial y}\right)^2} \qquad (1)$$

where $\frac{\partial f}{\partial x}$ and $\frac{\partial f}{\partial y}$ are the image derivatives (gradient component values) in the horizontal and vertical directions taken from the gradient images generated at step S3-4a in the case of processing for the reference image or step S3-4b in the case of processing for the input image.

Combined amplitude calculator 94 compares each combined gradient amplitude value calculated for the reference image with the amplitude threshold to identify combined gradient amplitude values which are below this threshold. Similarly, combined amplitude calculator 94 compares each combined gradient amplitude value calculated for the input image with the same amplitude threshold and identifies the combined gradient amplitude values which are less than the threshold. Combined amplitude calculator 94 then identifies the pixels that have a combined gradient amplitude value below the amplitude threshold in both the reference image and the input image. For each such identified pixel, combined amplitude calculator 94 then sets the absolute gradient values for those pixels to 0 in the two gradient images generated for the reference image at step S3-4a and also in the two gradient images generated for the input image at step S3-4b. Setting the gradient absolute values to 0 ensures that the pixels are not taken into account in subsequent processing.

The advantage of the thresholding performed at step S3-5 is to eliminate unstable measurements. Pixels which have very small gradient component values are more likely to be affected by additive noise - and since structure will be measured in subsequent processing by the relative ratios of amplitudes, even small amplitude variations can disturb the results when the starting values are small. The pixels eliminated in this way correspond to "flat" (homogeneous) regions in the images, where the only structure is due to random and largely invisible variations. Such regions are uninformative with regard to detecting significant changes and so it does no harm to ignore them.

It should be noted that properties other than the combined amplitude value described above could alternatively be measured and thresholded, such as the sum of absolute values or simply the maximum of the absolute values in the horizontal and vertical directions.

In the subsequent processing after step S3-5, neighbourhood sets of pixels (that is, corresponding regions of pixels) are processed jointly. Therefore, at step S3-6a, region selector 100 selects neighbourhoods (regions) from the gradient amplitude images of the reference image generated at step S3-4a (and modified at step S3-5) and performs the same processing for the input image at_ step S3-6b. The regions chosen at steps S3-6a and S3-6b are the same, so that the regions are identical for the reference image and the input image. In this embodiment, the regions are square or rectangular blocks but, in general, they may consist of regions of arbitrary shape. In some implementations, it will be advantageous for rectangular blocks to have dimensions that are powers of two because this makes memory addressing more efficient and therefore provides computational efficiency. In this embodiment, the support of the blocks is contiguous in space but this is not a necessary condition. Blocks or neighbourhoods with holes or non-contiguous support are equally valid. Regardless of shape, these blocks select the regions to be used in the illumination invariant structure comparison (to be described subsequently).

In this embodiment regions of varying size are selected. Furthermore, in this embodiment, regions at a plurality of positions are selected so that some of them overlap. More particularly, regions of three different sizes are defined - 32x32, 16x16 and 8x8 pixels. For each respective size, a shift-step of half the region size is used in each direction to define regions at different positions within the image.

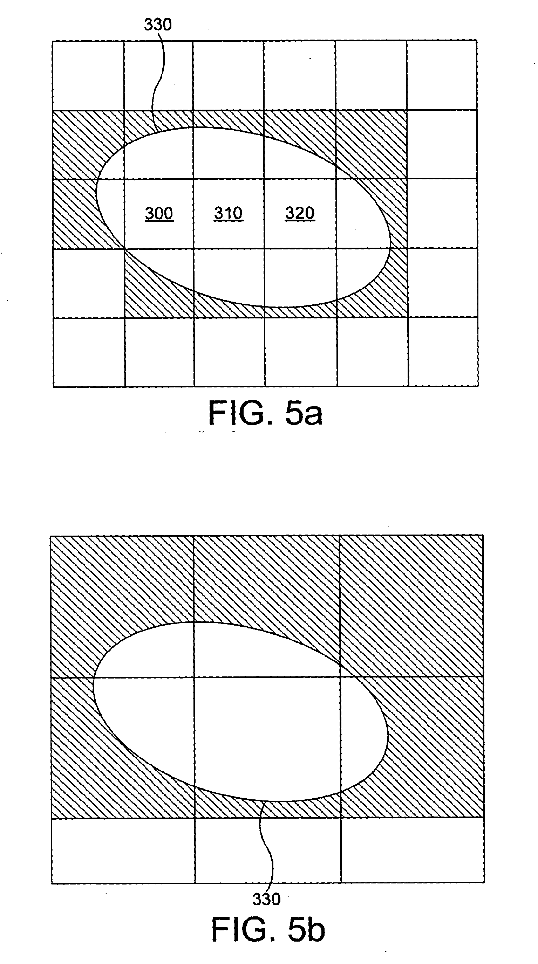

The reason for selecting blocks of different sizes is illustrated in Figures 5a and 5b. Figure 5a represents the image of an elliptical object of uniform intensity against a background of different (but also uniform) intensity. It is assumed that the reference image contains only the uniform background. The block-wise comparison of structure detects change in the hatched blocks around the periphery of the object, but not in the centre. Neighbourhood blocks 300, 310 and 320 are not activated by the presence of this object because all of the pixels in each block change in the same way, with the result that the change in intensity can be modelled by an illumination change - in other words, since the apparent structure does not change, the system detects nothing here. This is the "aperture" problem, mentioned previously.

In Figure 5b, by contrast, there is no aperture problem, since the larger size of the neighbourhoods enables the blocks to completely cover the object. Of course, a penalty is paid in terms of reduced localisation accuracy, because the overall area detected is increased. This is why this embodiment integrates measurements taken over a range of different scales (that is, different region sizes), thereby addressing the aperture problem.

Optionally, it is advantageous, in some circumstances, to weight the pixels in the neighbourhoods selected at steps S3-6a and S3-6b. For instance, for a square region, the pixel values could be weighted by a Gaussian function centred on the square. Weighting in this way, by a tapered function, means that pixels near the centre of the neighbourhood have a relatively greater influence on the result of the subsequent comparison. This leads to benefits in localising structure changes.

As a result of the processing at step S3-6a, a plurality of regions has been defined in each of the gradient images of the reference image, each region containing absolute values. The regions within each gradient image have positions which are the same as the positions of the regions in the other gradient image. Similarly, the different sizes of the regions defined in a gradient image are the same as the different sizes of regions defined in the other gradient image. As a result, corresponding regions having the same size and same position exist in the gradient images. The corresponding regions from the gradient images are referred to herein as a "set" of corresponding regions. In the same way, the processing at step S3-6b generates the same regions of absolute values in the gradient images of the input image.

At steps 3-8a to S3-12a, processing is performed for the reference image to generate a representative region value for each set of corresponding regions. The same processing is performed at steps S3-8b to S3-12b for the input image. This processing will be described below for the reference image, but the processing for the input image is the same.

More particularly, at step S3-8a, concatenator 110 selects the next set of corresponding regions from the gradient images of the reference image. In this embodiment, the set contains two regions because there are two gradient images (horizontal and vertical). Each region has the same position and size in its respective gradient image.

At step S3-10a, concatenator 110 concatenates the gradient absolute values within the regions selected at step S3-8a to form a region vector.

More particularly, all the (possibly weighted) absolute pixel gradient values in the regions of the set are concatenated into a single region vector. The dimension of the vector depends on the size of the regions and on the number of gradient images. In this embodiment, since pixel intensity is considered, there are two gradient images for each image. Hence the dimension of the region vector generated at step S3-10a is $2N_B$, where $N_B$ is the number of pixels in each region. In the case that more gradient images are calculated - for example, for each of a plurality of colour channels - there would be $2N_C N_B$ elements in each vector, where $N_C$ is the number of channels.

The order in which the absolute pixel gradient values are arranged in the vector does not matter, provided that the same order is used for the reference image and the input image during the processing at steps S3-10a and S3-10b, respectively.

At step S3-12a, concatenator 110 determines whether another set of corresponding regions remains to be processed. Steps S3-8a to S3-12a are repeated until each set of corresponding regions has been processed in the way described above.

As a result of this processing, a representative region value (a vector in this embodiment) has been generated for each of a plurality of regions in the reference image. Each region has a different size and position in the reference image, and each region value is representative of the amplitudes of the gradient values of the pixels within the region.

As noted above, processing is performed at steps S3-8b to S3-12b for the input image that is the same as the processing performed at steps S3-8a to S3-12a for the reference image, thereby generating a representative region value for each region in the input image (the regions of the reference image and input image being the same).

Referring again to Figure 2, at step S2-6, correlator 120 compares the representative region values from corresponding regions of the reference image and the selected input image (that is, regions having the same position and size in the reference image and input image) to generate a correlation map. More particularly, a correlation value is generated for each pair of representative region values, and the correlation value is stored in the correlation map as discussed below.

The correlation process performed at step S2-6 is designed to be invariant to linear scaling of the gradient amplitudes. In this embodiment, this is achieved by computing the cosine of the angle between each pair of corresponding region vectors (that is, the region vector generated at step S3-10a for a region in the reference image and the region vector generated at step S3-10b for the region having the same position and size in the input image). If a pair of vectors is related by linear scaling, the angle between the two will be zero: hence the cosine will be unity. In this embodiment, the cosine is calculated using a dot product, as follows:

$$\cos\theta \approx \frac{\mathbf{v}_{in} \cdot \mathbf{v}_{ref}}{|\mathbf{v}_{in}||\mathbf{v}_{ref}|} \tag{2}$$

where $\mathbf{v}_{in}$ and $\mathbf{v}_{ref}$ are the input image and reference image region vectors, respectively, and $|\mathbf{v}|$ denotes a vector norm.

There are several possibilities for numerically efficient implementations of the robust comparison method defined by equation (2) in this step. By expanding the cosine formula in terms of the individual vector components, it may be seen to consist of the summation of pixel-wise multiplications:

$$\cos\theta = \frac{\mathbf{v}_{in} \cdot \mathbf{v}_{ref}}{|\mathbf{v}_{in}||\mathbf{v}_{ref}|} = \frac{\sum_i v_{in}(i) v_{ref}(i)}{\sqrt{\sum_i v_{in}^2(i) \sum_i v_{ref}^2(i)}} \tag{3}$$

where $v(i)$ denotes the $i^{th}$ element of the vector $v$. Each of the multiplications should only be performed once, with the result stored for reuse, if input blocks overlap due to a shift-pattern. Accordingly, three product images are defined:

$$p(x,y) = \left|\frac{\partial f_{in}(x,y)}{\partial x}\right|\left|\frac{\partial f_{ref}(x,y)}{\partial x}\right| + \left|\frac{\partial f_{in}(x,y)}{\partial y}\right|\left|\frac{\partial f_{ref}(x,y)}{\partial y}\right| \tag{4}$$

$$e_{in}(x,y) = \left|\frac{\partial f_{in}(x,y)}{\partial x}\right|^2 + \left|\frac{\partial f_{in}(x,y)}{\partial y}\right|^2 \tag{5}$$

$$e_{ref}(x,y) = \left|\frac{\partial f_{ref}(x,y)}{\partial x}\right|^2 + \left|\frac{\partial f_{ref}(x,y)}{\partial y}\right|^2 \tag{6}$$

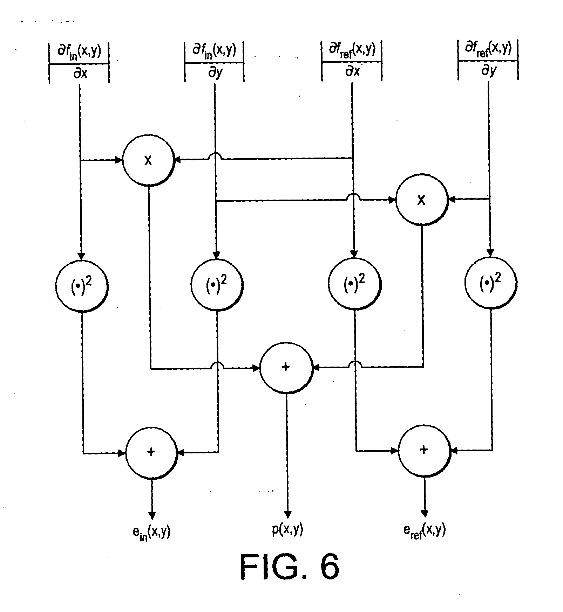

Now, the cosine calculation relies only on selection and summation of elements from these product images, followed by a single multiplication, square root and division. Furthermore, there are efficient ways to realise such summations. For instance, if the input blocks are to be shifted by one pixel at each step, then the summation is equivalent to a linear filtering operation on each of the product images. Further computational gains may then be made by choosing a separable filter. Note that, at the same time, use of a linear filter permits a straightforward realisation of the tapered centre-weighting discussed earlier - the filter coefficients are exactly the weights described. The process performed in this embodiment to evaluate equations (4), (5) and (6) is shown in Figure 6.

In applications where weighting is not necessary and the input neighbourhoods are constrained to be rectangular in shape (or at least a union of rectangles), an alternative efficient implementation is achieved via the method of integral images (P. Viola and M. Jones, "Rapid object detection using a boosted cascade of simple features", In Proc. IEEE Conference on Computer Vision and Pattern Recognition, Dec. 2001), also known as summed area tables (F. Crow, "Summed-area tables for texture mapping", in Proc. SIGGRAPH, 18(3):207-212, 1984). Transformation of the data into the integral representation provides fast computation, with only four pixel references (the coordinates of corners of the rectangles) and three addition operations per summation. Crucially, this makes the computational cost of the summations constant, regardless of the block size.

In an embodiment in which this approach is followed, integral product images may be generated as follows:

$$P(x,y) = \sum_{a \le x}\sum_{b \le y} p(a,b) \qquad\qquad (7)$$

$$E_{in}(x,y) = \sum_{a \le x}\sum_{b \le y} e_{in}(a,b) \qquad\qquad (8)$$

$$E_{ref}(x,y) = \sum_{a \le x}\sum_{b \le y} e_{ref}(a,b) \qquad\qquad (9)$$

This is effected, in each case, by a single pass over the image, with two addition operations per pixel.

Earlier, it was noted that some pixels may be advantageously ignored at step S3-3 and/or step S3-5, because either their intensity or combined gradient amplitude renders measurements unreliable or unstable. It may then occur that a region of pixels consists entirely of "ignored" pixels. There are a variety of ways to handle this situation. In this embodiment, a value of $\cos\theta = 1$ is assigned for such regions in the processing at step S2-6, which implicitly assumes that ignored pixels contain no changes in structure.

When only some of the pixels in a region are ignored, there is no problem, since the correlation/cosine calculation proceeds as usual. In this case, by previously setting the ignored gradient values to zero (step S3-3) or gradient amplitudes to zero (step S3-5), the cosine of the angle between the non-zero components only is effectively computed.

In general, each cosine measure will attain its maximum value of unity when the gradient amplitude components in the reference and input regions are scaled copies of one another - that is, when $v_{in} = \alpha\, v_{ref}$. This condition includes the change of illumination polarity depicted in Figures 4a and 4b.

As discussed above, the processing at step S2-6 generates a correlation value (a cosine value in this embodiment) for each pair of corresponding regions (comprising a region in the reference image and a region at the same position and having the same size in the input image).

There are many different ways to implement the assignment and combination of resulting cosine values over the image space and across scales in order to generate a correlation map of the same size as the reference image and input image. The choice will typically depend on the desired computational complexity and localisation accuracy.

For example, in the case of a very basic embodiment in which a single size of region is selected at steps S3-6a and S3-6b, and a block-shift pattern without any overlapping is used, the results of the cosine calculation for each region may be assigned to every pixel in that region within the correlation map. The shift pattern and output assignment determine the effective resolution of the correlation map.

If the regions are chosen at steps S3-6a and S3-6b so as to overlap, there is a choice whether to assign the output cosine values so that they do not overlap (for example by assigning them to a central region of the block) or to assign them so that they do. In the latter event, some method of combination is necessary, to integrate measurements from neighbouring, overlapping blocks. Similarly, combination is typically required if processing is effected at a range of different scales. The combination of cosine values for regions of different size and/or different position may employ any appropriate rule, including (but not limited to) summation (or averaging), minimum, maximum or product (or geometric mean). A summation rule, for example, could be implemented by maintaining an accumulator array, of the same size as the reference image and input image: for each region processed (of any size) the resulting cosine value is added to each of the respective output-region pixels in the accumulator. Then, if each pixel is covered by the same number, $N_{overlap}$, of output-region, the accumulated values will lie in the correct range [O, Noverlap].

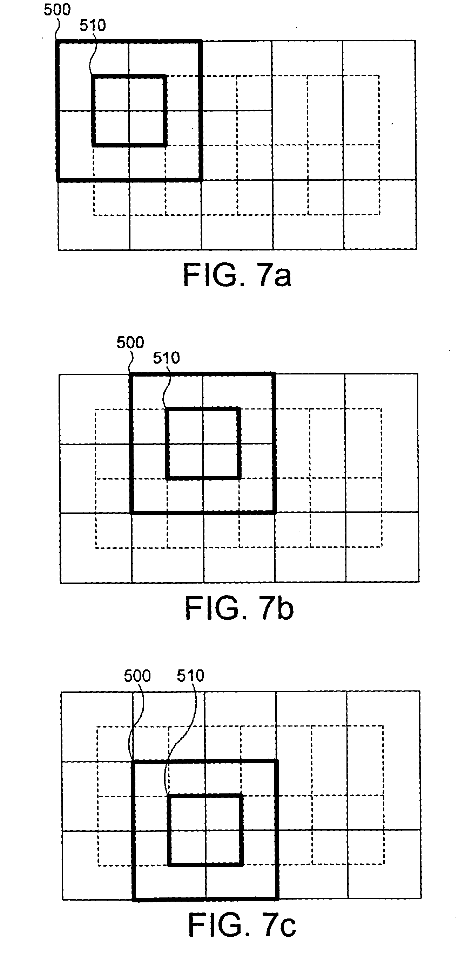

In this embodiment, a shift-step of half the block size is used in each direction. The result of the cosine measurement is assigned to each pixel in the central quadrant of each block in the correlation map, as shown in Figures 7a, 7b and 7c. In these figures, the input blocks are denoted by the larger squares with solid lines, while the smaller output blocks are denoted by dotted lines. The figures highlight three example positions of a block 500 in the reference and input images and associated block 510 in the correlation map. This illustrates how the blocks in the correlation map do not overlap, despite an overlapped pattern of block selection in the reference and input images. In the example, the cosine measurement for block 500 is assigned to every pixel within block 510 in the correlation map.

In this embodiment, three scales are used, with blocks of 32x32, 16x16 and 8x8 pixels, respectively. The resulting correlation maps (one for each scale) are combined via summation, to produce the final correlation map.

Referring again to Figure 2, at step S2-8, image change detector 130 processes the correlation map generated at step S2-6 to detect significant structure changes between the reference image and the input image. As described earlier, the correlation map in this embodiment has the same number of pixels in the vertical and horizontal directions as the reference image and input image, and comprises a single real-valued number for each pixel. Accordingly, in a simple embodiment, the processing at step S2-8 comprises the comparison of each value to a threshold, with the value being replaced with a value 1 if it is below the threshold and a value 0 otherwise. This gives a binary map in which pixels having the value 1 define the locations of significant structure change in the image.

In more advanced embodiments, it may be advantageous to further process the output to suppress spuriously detected changes. Such post-processing might include, for example, size-based processing, in which contiguous "blobs" of pixels having value 1 smaller than a certain area are rejected. It may also include morphological processing (either grey-scale or binary), in which blobs of certain shapes (and size) are rejected, for example using techniques as described in "Digital Image Processing", Second Edition by Gonzalez and Woods, Practice-Hall 2003, pages 519 to 560. In general, this type of processing would reflect assumptions that the structures of interest have certain size and shape attributes, which distinguish them from responses due to noise.

The post-processing may operate in the temporal as well as the spatial domain. For example, if it is assumed that valid objects have a certain minimum temporal duration, then detections with shorter durations can be excluded. This can lead to a reduction in "flickering" noise, where spurious detections appear and disappear in quick succession.

Referring again to Figure 2, at step S2-10, it is determined whether another input image in the sequence is to be processed. Steps S2-2 to S2-10 are repeated until each input image has been processed in the way described above.

Second Embodiment

A second embodiment of the present invention will now be described.

In the first embodiment, the problem of illumination changes causing a gradient polarity change (as illustrated in, and described with reference to, Figures 4a and 4b) was addressed but by using non-signed values of the gradient components. In the second embodiment, the problem is addressed instead by calculating a non-signed value of the cosine correlation value at step S2-6.

The component of the second embodiment and the processing operations performed thereby are the same as those in the first embodiment with the following exceptions:

- In the second embodiment, the absolute value calculator 90 is omitted from the components shown in Figure 1.

- In the second embodiment, steps S3-4a and S3-4b are omitted from the processing shown in Figure 3, and the processing in subsequent steps is performed using gradient values rather than absolute gradient values. As a result, in the second embodiment, each representative region vector generated as a result of the processing in Figure 3 contains signed gradient component values.

- The processing performed at step S2-6 by correlator 120 in the second embodiment is different from the processing performed in the first embodiment. The processing performed in the second embodiment will be described below.

As in the first embodiment, the correlation process performed at step S2-6 in the second embodiment is designed to be invariant to linear scaling of the gradients.

In the second embodiment, at step S2-6, correlator 120 computes a non-signed measure of the cosine of the angle between each pair of corresponding region vectors (that is, the region vector generated a step S3-10a for a region in the reference image and the region vector generated at step S3-10b for the region having the same position and size in the input image). More particularly, in the second embodiment, correlator 120 calculates an absolute cosine value using a dot product as follows:

$$\left|\cos\theta\right| = \frac{\left|\mathbf{v}_{in} \cdot \mathbf{v}_{ref}\right|}{\left\|\mathbf{v}_{in}\right\|\left\|\mathbf{v}_{ref}\right\|} \qquad (10)$$

where $\mathbf{v}_{in}$ and $\mathbf{v}_{ref}$ are the input image and reference image region vectors, respectively, $\|\mathbf{v}\|$ denotes a vector norm and |v| denotes the absolute value. The application of the absolute value operator ensures that, should either $\mathbf{v}_{in}$ or $\mathbf{v}_{ref}$ change polarity (sign), the result of the calculation is unaffected.

There are several possibilities for numerically efficient implementations of the robust comparison method defined by equation (10) in this step. By expanding the cosine formula in terms of the individual vector components, it may be seen to consist of the summation of pixel-wise multiplications:

$$\left|\cos\theta\right| = \frac{\left|\mathbf{v}_{\text{in}} \cdot \mathbf{v}_{\text{ref}}\right|}{\left\|\mathbf{v}_{\text{in}}\right\| \left\|\mathbf{v}_{\text{ref}}\right\|} \approx \frac{\left|\sum_{i} v_{\text{in}}(i)\, v_{\text{ref}}(i)\right|}{\sqrt{\sum_{i} v_{\text{in}}^{2}(i) \sum_{i} v_{\text{ref}}^{2}(i)}} \qquad (11)$$

where $v(i)$ denotes the $i^{th}$ element of the vector $\mathbf{v}$. Each of the multiplications should only be performed once, with the result stored for reuse, if input blocks overlap due to a shift-pattern. Accordingly, three product images are defined :

$$p(x,y) = \frac{\partial f_{\text{in}}(x,y)}{\partial x}\frac{\partial f_{\text{ref}}(x,y)}{\partial x} + \frac{\partial f_{\text{in}}(x,y)}{\partial y}\frac{\partial f_{\text{ref}}(x,y)}{\partial y} \qquad (12)$$

$$e_{\text{in}}(x,y) = \left(\frac{\partial f_{\text{in}}(x,y)}{\partial x}\right)^{2} + \left(\frac{\partial f_{\text{in}}(x,y)}{\partial y}\right)^{2} \qquad (13)$$

$$e_{\text{ref}}(x,y) = \left(\frac{\partial f_{\text{ref}}(x,y)}{\partial x}\right)^{2} + \left(\frac{\partial f_{\text{ref}}(x,y)}{\partial y}\right)^{2} \qquad (14)$$

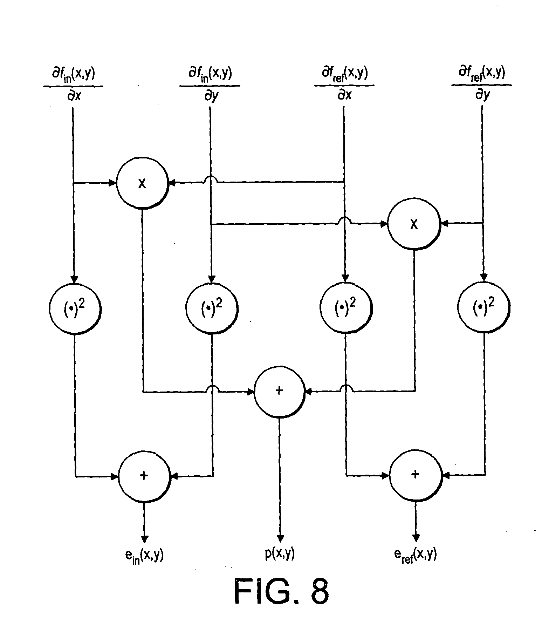

Now, the cosine calculation relies only on selection and summation of elements from these product images, followed by a single multiplication, absolute value, square root and division. Furthermore, there are efficient ways to realise such summations. For instance, if the input blocks are to be shifted by one pixel at each step, then the summation is equivalent to a linear filtering operation on each of the product images. Further computational gains may then be made by choosing a separable filter. Note that, at the same time, use of a linear filter permits a straightforward realisation of the tapered centre-weighting discussed earlier - the filter coefficients are exactly the weights described. The process performed in such an embodiment to evaluate equations (12), (13) and (14) is shown in Figure 8.

Experiments have shown that, at least in some cases, the absolute value of the cosine provides less than optimal performance. Therefore, in this embodiment, a modified cosine measure is computed. Instead of the product image of equation (12), its absolute value is calculated:

$$p(x,y) = \left|\frac{\partial f_{\text{in}}(x,y)}{\partial x}\frac{\partial f_{\text{ref}}(x,y)}{\partial x} + \frac{\partial f_{\text{in}}(x,y)}{\partial y}\frac{\partial f_{\text{ref}}(x,y)}{\partial y}\right| \qquad (15)$$

The construction is invariant to changes of polarity at individual pixels (rather than over the entire region vector). That is, if the input image gradient components $\left(\dfrac{\partial f_{\text{in}}(x,y)}{\partial x}, \dfrac{\partial f_{\text{in}}(x,y)}{\partial y}\right)$ are replaced by by $\left(-\dfrac{\partial f_{\text{in}}(x,y)}{\partial x}, -\dfrac{\partial f_{\text{in}}(x,y)}{\partial y}\right)$, the value of $p(x,y)$ is unaffected. The same holds for the reference image gradient components.

Modifications

Many modifications can be made to the embodiments described above within the scope of the accompanying claims.

For example, as mentioned earlier, the use of gradient images leads to additional benefits in the efficient modelling of the scene background. In the embodiments above, a single reference image is used. Ideally, this may be an image of the empty background scene, chosen either by a human operator or by some other means. In many applications, however, it will not be possible to obtain a reference image in this manner - for example, because a scene contains constant traffic of targets or because it is too time-consuming for a human operator to initialise every camera in a large network in this manner. In such scenarios, it is possible to synthesize a background model from a plurality of images over time.

In this case, a more advanced embodiment of the system can record a plurality of the gradient images generated at step S3-2b for different input images over a specified time period. The background model is then formed by taking the median of each pixel's gradient components over time. By taking the median in the gradient domain in this way, the resulting reference background model is made independent of both the current illumination and the presence of moving objects in the batch of images. The basis for this is the relative constancy of image gradients under changing illumination combined with the sparseness of large magnitude responses for typical natural scenes. If, on the other hand, the median of image intensity were used instead, the reference background model would be sensitive to illumination changes during the learning period. It would also be much more susceptible to moving objects obscuring the background during the learning period.

The period of learning described above may be performed offline (i.e., before the system begins detecting objects) or online (i.e., while detecting objects). An online learning period consists of median filtering over a "sliding window" of gradient history at each pixel, so that long-term changes to the scene are slowly built into the reference model at a pre-determined rate.

In the embodiments above, the reference image and each input image are processed to generate gradient images at steps S3-2a and S3-2b for use in subsequent processing. While gradient images provide a strong platform from which to analyse image structure and measure change, other types of filter may be used instead that offer similar strengths, with additional benefits for certain scenarios. Laplacian filtering, in which the second derivative of the image intensity function is computed, is one example, while a wavelet filter-bank is another. The unifying aspect in all cases is that the filtering generates data defining the spatial rate of change of homogeneity of the image data at different pixel positions, and is either high-pass or band-pass, that is, it attenuates low frequency changes in homogeneity in the spatial domain and accentuates (amplifies) mid- to high-range frequency changes in homogeneity. Suppressing low frequencies in this way is beneficial because it ignores changes that are constant or approximately constant over a region, such as those typically caused by varying brightness.

In the processing performed in the first embodiment above at steps S3-4a and S3-4b, the sign (that is, the plus or minus sign) of each gradient value is removed by calculating the absolute value of each gradient value. However, any other process which removes the sign while retaining the amplitude in some form within the resulting non-signed value may be performed instead. Thus, for example, a process of calculating the square of each gradient value may be performed to generate non-signed values.

In the embodiments described above, the processing at step S2-6 computes the cosine (first embodiment) or absolute cosine (second embodiment) of the angle between each pair of corresponding region vectors. However, angular measures other than the cosine may be substituted. Trivially, for example, the angle $\theta$ itself may be used in place of its cosine. Another alternative is to normalise each vector by its magnitude, so that both lie on a circular arc of unit radius. The Euclidean distance between these two points on the arc is related to the angle between the vectors as follows:

$$D = \sqrt{2(1-\cos\theta)} \qquad\qquad (16)$$

In fact, such a normalised Euclidean distance, D, is equivalent to a normalised vector distance. In general, any functional form related to the angle between the vectors can be used in an embodiment, and in particular, those which preserve a monotonic relationship with the angle - like the examples just mentioned.

As a modification to the cosine evaluation used to perform the comparison at step S2-8, any process that performs a comparison of the derivative structure in the regions can be substituted to perform the comparison. However, as already noted, it is advantageous for the comparison to be invariant to linear scaling. Such invariant comparison methods include (but are not limited to) the normalised vector distance, normalised correlation, linear dependence detector and Wronskian detector, all of which are described in the works referenced previously under the heading "Neighbourhood Change Detection". The unifying characteristic is that the comparison of **Vref** with α**Vref** will yield the same result, independent of the neighbourhood content and the scaling factor α.

Another modification relates to the noise-filtering to remove noise from the correlation map at step S2-8. As well as (or instead of) the morphological filtering mentioned previously, it is possible to validate detected blobs by computing the cosine distance measure for the area masked by each blob. Evaluating the comparison over an alternative area in this way provides another, sometimes more robust, way to test for change. It can be considered as a second level of structure analysis, using adaptive neighbourhoods, in place of the fixed neighbourhoods of the initial processing stage. More particularly, the regions in the correlation map which represent change are used to set the regions when steps S3-6a and S3-6b are subsequently performed for the next input image. Since it is cheap to evaluate the cosine measure for rectangular blocks (when using the integral image implementation, described previously), it would be advantageous to perform such validation on rectangular regions, such as, for example, the bounding box of each detected blob.

In another alternative embodiment, the multi-scale implementation of the previous embodiments (in which regions of varying sizes are selected at steps S3-6a and S3-6b for the reference image and each input image, and subsequently analysed) could be replaced by a multi-resolution implementation. In such an embodiment, instead of selecting regions of different size from within constant resolution images, the input and reference images are downsampled appropriately, so that a window of constant size, operating upon a pair of reduced resolution images, achieves the desired function of comparing structure at a larger scale. One typical benefit of multi-resolution - as opposed to multi-scale - processing is that the computational effort reduces, rather than increasing, at larger (*i.e.*, coarser) scales, since the region size remains constant, with image size decreasing instead. In certain applications, there are further advantages to using either the multi-resolution system or a hybrid combination of both multi-scale and multi-resolution approaches (in which both the image size and the block size are modified to achieve the desired scale of structure-analysis). For example, the size of the gradient operators may be adapted to suit the scale of processing and/or neighbourhood size.

Yet another modification is the use of multiple reference images to gain additional insight into the nature of changes in the scene. For example, an input image can be compared firstly with a "background" reference frame and secondly with a recent, stored input image. The first comparison will yield blobs for any regions that are different from the background, while the second will yield blobs for regions that have changed over a short timescale - i.e., due to object motion. Thus, by comparing the two outputs, this approach will distinguish static changes (e.g., due to object arrival or departure) from dynamic ones. As befits the particular application, the system may then either ignore the static changes, absorbing them into the reference background model, or trigger an alarm (such as for theft or object abandonment).

In the processing at step S3-3 in the embodiments above, the value of each pixel in both the input image and the reference image is tested to determine if it lies above a first intensity threshold or below a second intensity threshold. Each pixel identified as having an intensity above or below the respective thresholds and the pixel at the same position in the other image (irrespective of its intensity value) is then processed so that it is ignored in subsequent processing. However, instead, the value of each pixel in only one image (the input image or the reference image) may be tested resulting in reduced processing compared to the embodiments above. In this case, a pixel having an intensity above the first threshold or below the second threshold and the pixel at the same position in the other (non-tested) image would still be ignored during subsequent processing by setting the gradient components to zero in all four gradient images.

In the processing at step S3-5, a combined gradient amplitude value (first embodiment) or a combined gradient value (second embodiment) is calculated for each pixel in the input image and also each pixel in the reference image, and then pixels which have a combined value below a threshold in both the input image and the reference image are processed so that they are ignored in subsequent processing. Alternatively, any pixel having a combined value below the threshold in either the input image or the reference image together with the pixel at the same position in the other image (irrespective of its combined value) may be processed so that they are ignored in subsequent processing. This is achieved by setting the absolute gradient values to zero in the two gradient images for the input image and the two gradient images for the reference image (so that the pixels are still ignored in both images). As a further modification, a combined value may be calculated and compared against the threshold for each pixel in only one of the images, thereby reducing processing requirements. Each pixel having a combined value below the threshold and the pixel at the corresponding position in the other (non-tested) image would then be processed so that they are ignored in subsequent processing.

As noted above, the processing at steps S3-3 and S3-5 is optional. In an embodiment which omits this processing, the processing for the reference image data at steps S3-2a to S3-12a may be performed once and the results stored, so that the processing does not have to be performed each time a new input image is processed. Consequently, in this case, the processing at steps S3-2a to S3-12a for the reference image may be performed "off line*"* in non-real-time before any input image data is received.

As noted in the introduction, change detection is a fundamental function in computer vision. Embodiments of the present invention may be applied in any domain where change detection is required and will tend to excel over simpler methods (such as background subtraction) when robustness is desired to factors that result in (approximately) linear scaling of the gradient components. These may include, for example, changing illumination, contrast, brightness or adaptive gain control in standard imagery or temperature change in infra-red imagery.

Although the preceding embodiments were described in terms of the detection of change while discounting effects such as illumination, it would be possible to apply the same techniques to the detection of illumination change in static scenes. For example, the output of the robust change detection process above could be coupled with a non-robust change detection technique such as background subtraction: then changes highlighted by the latter technique but which pass the robust comparison could be deemed evidence of an illumination variation.

In the embodiments described above, processing is performed by a programmable computer processing apparatus using processing routines defined by computer program instructions. However, some, or all, of the processing could be performed using hardware instead.

Other modifications are, of course, possible.

**Claims**

1. A method of processing image data defining first and second images to detect change in the images, the method comprising:

   processing image data of the first image to generate data representing the spatial rate of change of homogeneity of the image data at different pixel positions in the first image;
   processing image data of the second image to generate data representing the spatial rate of change of homogeneity of the image data at different pixel positions in the second image;
   combining the spatial rate of change data generated for different pixel positions in the first image to generate a representative value for a plurality of pixels in the first image;
   combining the spatial rate of change data generated for different pixel positions in the second image to generate a representative value for a plurality of pixels in the second image; and
   comparing the representative values for the first and second images to identify differences between the images.

2. A method according to Claim 1, wherein the image data of the first and second images is processed to generate the data representing the spatial rate of change of homogeneity of the image data by applying a filter to the image data to amplify relatively high spatial rates of change of homogeneity of the image data.

3. A method according to Claim 1 or Claim 2, wherein the image data of the first and second images is processed to generate the data representing the spatial rate of change of homogeneity of the image data by applying a filter to the image data to attenuate relatively low spatial rates of change of homogeneity of the image data.

4. A method according to Claim 2 or Claim 3, wherein a linear filter is applied to the image data of the first and second images to generate the data representing the spatial rate of change of homogeneity of the image data.

5. A method according to Claim 4, wherein the linear filter comprises one of a gradient filter, a Laplacian filter and a wavelet filter.

6. A method according to any preceding claim, wherein the process of comparing the representative values comprises:

   calculating a correlation value representing the correlation between the representative values; and
   comparing the correlation value against a threshold.

7. A method according to any preceding claim, wherein:

   the spatial rate of change data for different pixel positions in the first image is combined to generate a respective representative value for each of a plurality of different size regions in the first image,
   the spatial rate of change data for different pixel positions in the second image is combined to generate a respective representative value for each of a plurality of different size regions in the second image, the regions in the second image having the same sizes as the regions in the first image; and
   the process of comparing the representative values comprises comparing the representative values for regions of the same size from the first and second images.

8. A method according to any preceding claim, wherein:

   the spatial rate of change data for different pixel positions in the first image is combined to generate a respective representative value for each of a plurality of regions at different positions in the first image;
   the spatial rate of change data for different pixel positions in the second image is combined to generate a respective representative value for each of a plurality of regions at different positions in the second image, the positions of the regions in the second image being the same as the positions of the regions in the first image; and the process of comparing the representative values comprises comparing the representative values for regions at the same position in the first and second images.

9. A method according to Claim 7 or Claim 8, wherein the different regions in each of the first and second images are selected such that regions overlap within an image.

10. A method according to Claim 9, wherein the process of comparing the representative values further comprises combining the comparison results of overlapping regions to generate a respective result for each pixel in the overlap.

11. A method according to any of Claims 1 to 6, wherein:

the spatial rate of change data for the first image is combined to generate a representative value for the whole of the first image;
the spatial rate of change data for the second image is combined to generate a representative value for the whole of the second image; and
the representative values for the whole of the first and second images are compared to identify differences between the images.

12. A method according to any preceding claim, further comprising:

identifying pixels in the first image having a value greater than a first pixel value threshold or less than a second pixel value threshold;
and wherein:

the identified pixels in the first image and pixels having the same position in the second image are not taken into account during the comparison process.

13. A method according to Claim 12, further comprising:

identifying pixels in the second image having a value greater than the first pixel value threshold or less than the second pixel value threshold;
and wherein:

the identified pixels in the second image and pixels having the same position in the first image are not taken into account during the comparison process.

14. A method according to Claim 12 or Claim 13, wherein a value of 0 is assigned to each identified pixel and the corresponding pixel at the same position in the other image as the spatial rate of change data for the pixels so that the pixels are not taken into account during the comparison process.

15. A method according to any preceding claim, wherein:

the process of generating data representing the spatial rate of change of homogeneity of the image data of the first image comprises processing the first image data to generate data defining the spatial rate of change of homogeneity of the first image data in a plurality of different directions;
the processes of generating data representing the spatial rate of change of homogeneity of the image data of the second image comprises processing the second image data to generate data defining the spatial rate of change of homogeneity of the second image data in a plurality of different directions, the directions being the same for the image data of the first and second images.

16. A method according to Claim 15, further comprising:

combining the spatial rate of change data for pixels at the same positions in the spatial rate of change data generated for the different directions in the first image to generate a respective combined value for each pair of pixels; and
testing each combined value to determine whether it is below a combined value threshold;
and wherein pixels for which the combined value is below the combined value threshold and pixels having the same position in the second image are not taken into account during the comparison process.

**17.** A method according to Claim 16, further comprising:

combining the spatial rate of change data for pixels at the same positions in the spatial rate of change data generated for the different directions in the second image to generate a respective combined value for each pair of pixels; and
testing each combined value to determine whether it is below a combined value threshold;
and wherein pixels for which the combined value is below the combined value threshold and pixels having the same position in the first image are not taken into account during the comparison process.

**18.** A method according to Claim 16 or Claim 17, wherein a value 0 is assigned as the spatial rate of change data to each pixel for which the combined value was below the threshold and to each pixel at the same position in the other image so that the pixels are not taken into account during the comparison process.

**19.** A method according to Claim 15, further comprising:

combining the spatial rate of change data for pixels at the same positions in the spatial rate of change data generated for the different directions in the first image to generate a respective combined value for each pair of pixels;
combining the spatial rate of change data for pixels at the same positions in the spatial rate of change data generated for the different directions in the second image to generate a respective combined value for each pair of pixels; and
testing each combined value to determine whether it is below a combined value threshold;
and wherein pixels for which the combined value is below the combined value threshold for both the first image and the second image are not taken into account during the comparison process.

**20.** A method according to Claim 19, wherein a value 0 is assigned as the spatial rate of change data to each pixel in the first image and the second image for which the combined value was below the threshold in both images so that the pixels are not taken into account during the comparison process.

**21.** A method according to any preceding claim, further comprising:

calculating a non-signed value for the spatial rate of change data of each pixel in the first and second images; and wherein:

the non-signed values are combined to generate each of the representative values.

**22.** A method according to any of Claims 1 to 20, wherein the process of comparing the representative values for the first and second images comprises calculating a non-signed correlation value.

**23.** A method according to Claim 22, wherein:

the process of combining the spatial rate of change data for each of the fist and second images comprises concatenating the data for different pixel positions in the image into a vector; and
the process of comparing the representative values for the first and second images comprises:

calculating a non-signed product of the vector for the first image and the vector for the second image; and
generating a non-signed correlation value in dependence upon the non-signed product.

**24.** A method according to any preceding claim; wherein the representative values of the first and second images are compared using a linear scale invariant comparison process.

**25.** A method according to Claim 24, wherein:

the process of combining the spatial rate of change data for each of the first and second images comprises concatenating the data for different pixel positions in the image into a vector; and
the process of comparing the representative values comprises determining a measure of the angle between the vectors.

26. A method according to Claim 25, wherein:

the process of comparing the representative values comprises determining the cosine of the angle between the vectors.

27. A method according to any preceding claim, further comprising:

weighting the spatial rate of change data for different pixel positions within the plurality of pixels in the first image; and
weighting the spatial rate of change data for different pixel positions within the plurality of pixels in the second image;
and wherein:

the representative values for the first and second images comprise the weighted spatial rate of change data values.

28. A method according to any of Claims 1 to 6, further comprising:

processing each of the first and second images to generate a respective plurality of images at different resolutions;
and wherein:

the processing to generate the spatial rate of change data, the processing to combine the spatial rate of change data and the processing to compare the representative values is performed for the first and second images at each resolution.

29. A method according to any preceding claim, further comprising:

processing image data of at least one further image to generate data representing the spatial rate of change of homogeneity of the image data at different pixel positions in each further image; and
synthesising the spatial rate of change data for each further image with the spatial rate of change data of the first image to generate synthesised rate of change data;
and wherein:

the process of combining the spatial rate of change data for different pixel positions in the first image comprises combining the synthesised spatial rate of change data for different pixel positions.

30. A method according to Claim 29, wherein the process of synthesising the spatial rate of change data comprises calculating a respective median value of the spatial rate of change data from the first image and each further image for each pixel position.

31. Apparatus for processing image data defining first and second images to detect change in the images, the apparatus comprising:

spatial rate of change calculating means operable to:

process image data of the first image to generate data representing the spatial rate of change of homogeneity of the image data at different pixel positions in the first image; and
process image data of the second image to generate data representing the spatial rate of change of homogeneity of the image data at different pixel positions in the second image; combining means operable to:

combine the spatial rate of change data generated for different pixel positions in the first image to generate a representative value for a plurality of pixels in the first image; and
combine the spatial rate of change data generated for different pixel positions in the second image to generate a representative value for a plurality of pixels in the second image; and
comparing means operable to compare the representative values for the first and second images to identify differences between the images.

32. Apparatus according to Claim 31, wherein the spatial rate of change calculating means is operable to process the image data of the first and second images to generate the data representing the spatial rate of change of homogeneity of the image data by applying a filter to the image data to amplify relatively high spatial rates of change of homogeneity of the image data.

33. Apparatus according to Claim 31 or Claim 32, wherein the spatial rate of change calculations means is operable to process the image data of the first and second images to generate the data representing the spatial rate of change of homogeneity of the image data by applying a filter to the image data to attenuate relatively low spatial rates of change of homogeneity of the image data.

34. Apparatus method according to Claim 32 or Claim 33, wherein the spatial rate of change calculations means is operable to apply a linear filter to the image data of the first and second images to generate the data representing the spatial rate of change of homogeneity of the image data.

35. Apparatus according to Claim 34, wherein the spatial rate of change calculations means is operable to apply a linear filter comprising one of a gradient filter, a Laplacian filter and a wavelet filter.

36. Apparatus according to any of Claims 31 to 35, wherein the comparing means comprises:

   correlation value calculating means operable to calculate a correlation value representing the correlation between the representative values; and
   means for comparing the correlation value against a threshold.

37. Apparatus according to any of Claims 31 to 35,
   wherein:

   the combining means is operable to:

      combine the spatial rate of change data for different pixel positions in the first image to generate a respective representative value for each of a plurality of different size regions in the first image;
      combine the spatial rate of change data for different pixel positions in the second image to generate a respective representative value for each of a plurality of different size regions in the second image, the regions in the second image having the same sizes as the regions in the first image; and

   the comparing means is arranged to compare the representative values for regions of the same size from the first and second images.

38. Apparatus according to any of Claims 31 to 37, wherein:

   the combining means is operable to:

      combine the spatial rate of change data for different pixel positions in the first image to generate a respective representative value for each of a plurality of regions at different positions in the first image;
      combine the spatial rate of change data for different pixel positions in the second image to generate a respective representative value for each of a plurality of regions at different positions in the second image, the positions of the regions in the second image being the same as the positions of the regions in the first image; and

   the comparing means is arranged to compare the representative values for regions at the same position in the first and second images.

39. Apparatus according to Claim 37 or Claim 38, wherein the combining means is arranged to select the different regions in each of the first and second images such that regions overlap within an image.

40. Apparatus according to Claim 39, wherein the comparing means is further operable to combine the comparison results of overlapping regions to generate a respective result for each pixel in the overlap.

**41.** Apparatus according to any of Claims 31 to 36, wherein:

the spatial rate of change calculations means is operable to:

combine the spatial rate of change data for the first image to generate a representative value for the whole of the first image; and
combine the spatial rate of change data for the second image to generate a representative value for the whole of the second image; and

the comparing means is operable to compare the representative values for the whole of the first and second images to identify differences between the images.

**42.** Apparatus according to any of Claims 31 to 41, further comprising:

pixel identifying means operable to identify pixels in the first image having a value greater than a first pixel value threshold or less than a second pixel value threshold;
and wherein:

the comparing means is arranged to perform comparison processing which does not take account of the identified pixels in the first image and pixels having the same position in the second image.

**43.** Apparatus according to Claim 42, wherein:

the pixel identifying means is operable to identify pixels in the second image having a value greater than the first pixel value threshold or less than the second pixel value threshold; and
the comparing means is arranged to perform comparison processing which does not take account of the identified pixels in the second image and pixels having the same position in the first image.

**44.** Apparatus according to Claim 42 or Claim 43, wherein the pixel identifying means is arranged to assign a value of 0 to each identified pixel and the corresponding pixel at the same position in the other image as the spatial rate of change data for the pixels so that the pixels are not taken into account by the comparing means during the comparison process.

**45.** Apparatus according to any of Claims 31 to 44, wherein the spatial rate of change calculations means is operable to:

process the first image data to generate data defining the spatial rate of change of homogeneity of the first image data in a plurality of different directions; and
process the second image data to generate data defining the spatial rate of change of homogeneity of the second image data in a plurality of different directions, the directions being the same for the image data of the first and second images.

**46.** Apparatus according to Claim 45, further comprising:

combined value generating means operable to combine the spatial rate of change data for pixels at the same positions in the spatial rate of change data generated for the different directions in the first image to generate a respective combined value for each pair of pixels; and
combined value testing means operable to test each combined value to determine whether it is below a combined value threshold;
and wherein the comparing means is arranged to perform comparison processing which does not take account of pixels for which the combined value is below the combined value threshold and pixels having the same position in the second image.

**47.** Apparatus according to Claim 46, wherein:

the combined value generating means is operable to combine the spatial rate of change data for pixels at the same positions in the spatial rate of change data generated for the different directions in the second image to generate a respective combined value for each pair of pixels;
the combined value testing means is operable to test each combined value for the second image to determine whether it is below a combined value threshold; and
the comparing means is arranged to perform comparison processing which does not take account of pixels for which the combined value is below the combined value threshold and pixels having the same position in the first image.

**48.** Apparatus according to Claim 46 or Claim 47, wherein the combined value testing means is arranged to assign a value 0 as the spatial rate of change data to each pixel for which the combined value was below the threshold and to each pixel at the same position in the other image so that the pixels are not taken into account by the comparing means during the comparison process.

**49.** Apparatus according to Claim 45, further comprising:

combined value generating means operable to:

combine the spatial rate of change data for pixels at the same positions in the spatial rate of change data generated for the different directions in the first image to generate a respective combined value for each pair of pixels; and
combine the spatial rate of change data for pixels at the same positions in the spatial rate of change data generated for the different directions in the second image to generate a respective combined value for each pair of pixels; and

combined value testing means operable to test each combined value to determine whether it is below a combined value threshold;
and wherein the comparing means is arranged to perform comparison processing which does not take account of pixels for which the combined value is below the combined value threshold for both the first image and the second image.

**50.** Apparatus according to Claim 49, wherein the combined value testing means is arranged to assign a value 0 as the spatial rate of change data to each pixel in the first image and the second image for which the combined value was below the threshold in both images so that the pixels are not taken into account by the comparing means during the comparison process.

**51.** Apparatus according to any of Claims 31 to 50, further comprising:

means for calculating a non-signed value for the spatial rate of change data of each pixel in the first and second images;
and wherein:

the combining means is arranged to combine the non-signed values to generate each of the representative values.

**52.** Apparatus according to any of Claims 31 to 50, wherein the comparing means is operable to compare the representative values for the first and second images to calculate a non-signed correlation value.

**53.** Apparatus according to Claim 52, wherein:

the combining means is operable to combine the spatial rate of change data for each of the fist and second images by concatenating the data for different pixel positions in the image into a vector; and
the comparing means is operable to compare the representative values for the first and second images by:

calculating a non-signed product of the vector for the first image and the vector for the second image; and
generating a non-signed correlation value in dependence upon the non-signed product.

**54.** Apparatus according to any of Claims 31 to 53, wherein the comparing means is operable to compare the representative values of the first and second images using a linear scale invariant comparison process.

**55.** Apparatus according to Claim 54, wherein:

the combining means is operable to combine the spatial rate of change data for each of the first and second images by concatenating the data for different pixel positions in the image into a vector; and

the comparing means is operable to compare the representative values by determining a measure of the angle between the vectors.

56. Apparatus according to Claim 55, wherein the comparing means is operable to compare the representative values by determining the cosine of the angle between the vectors.

57. Apparatus according to any of Claims 31 to 56, further comprising:

weighting means operable to:

weight the spatial rate of change data for different pixel positions within the plurality of pixels in the first image; and
weight the spatial rate of change data for different pixel positions within the plurality of pixels in the second image;
and wherein:

the combining means is operable to combine the weighted spatial rate of change data values to generate the representative values for the first and second images.

58. Apparatus according to any of Claims 31 to 36, further comprising:

means for processing each of the first and second images to generate a respective plurality of images at different resolutions;
and wherein:

the spatial rate of change calculating means, the combining means and the comparing means are operable to process the first and second images at each resolution.

59. Apparatus according to any of Claims 31 to 58, wherein:

the spatial rate of change calculations means is operable to process image data of at least one further image to generate data representing the spatial rate of change of homogeneity of the image data at different pixel positions in each further image;
the apparatus further comprises synthesising means operable to synthesise the spatial rate of change data for each further image with the spatial rate of change data of the first image to generate synthesised rate of change data; and
the combining means is operable to combine the spatial rate of change data for different pixel positions in the first image by combining the synthesised spatial rate of change data for different pixel positions.

60. Apparatus according to Claim 59, wherein the synthesising means is operable to synthesise the spatial rate of change data by calculating a respective median value of the spatial rate of change data from the first image and each further image for each pixel position.

61. A storage medium storing computer program instructions to program a programmable processing apparatus to become operable to perform a method as set out in at least one of Claims 1 to 30.

62. A signal carrying computer program instructions to program a programmable processing apparatus to become operable to perform a method as set out in at least one of Claims 1 to 30.

FIG. 1

EP 1 881 454 A1

START

SELECT NEXT INPUT IMAGE
FROM SEQUENCE ~S2-2

GENERATE REPRESENTATIVE
REGION VALUES FOR THE REFERENCE IMAGE
AND THE INPUT IMAGE ~S2-4

COMPARE THE REPRESENTATIVE REGION
VALUES FROM CORRESPONDING REGIONS OF
THE REFERENCE IMAGE AND THE INPUT IMAGE
TO GENERATE A CORRELATION MAP ~S2-6

PROCESS THE CORRELATION MAP
TO DETECT DIFFERENCES BETWEEN
THE IMAGES ~S2-8

YES ANOTHER INPUT IMAGE? ~S2-10

NO

END

FIG. 2

GENERATE REPRESENTATIVE REGION VALUES FOR THE REFERENCE IMAGE AND THE INPUT IMAGE — S2-4

S3-2a — CALCULATE GRADIENT COMPONENTS OF REFERENCE IMAGE

CALCULATE GRADIENT COMPONENTS OF INPUT IMAGE — S3-2b

SET GRADIENT COMPONENTS TO ZERO FOR PIXELS HAVING PIXEL VALUES IN EITHER THE REFERENCE IMAGE OR THE INPUT IMAGE THAT ARE ABOVE A FIRST PIXEL VALUE THRESHOLD OR BELOW A SECOND PIXEL VALUE THRESHOLD — S3-3

S3-4a — CALCULATE ABSOLUTE VALUES OF THE GRADIENT COMPONENTS IN THE REFERENCE IMAGE

CALCULATE ABSOLUTE VALUES OF THE GRADIENT COMPONENTS IN THE INPUT IMAGE — S3-4b

SET GRADIENT ABSOLUTE VALUES TO ZERO FOR PIXELS HAVING A COMBINED GRADIENT AMPLITUDE VALUE BELOW AN AMPLITUDE THRESHOLD IN BOTH THE REFERENCE IMAGE AND THE INPUT IMAGE — S3-5

A

# FIG. 3a

FIG. 3b

200 ~

~210

# FIG. 4a

200 ~

~210

# FIG. 4b

330

300     310     320

## FIG. 5a

330

## FIG. 5b

$$\left|\frac{\partial f_{in}(x,y)}{\partial x}\right| \qquad \left|\frac{\partial f_{in}(x,y)}{\partial y}\right| \qquad \left|\frac{\partial f_{ref}(x,y)}{\partial x}\right| \qquad \left|\frac{\partial f_{ref}(x,y)}{\partial y}\right|$$

$e_{in}(x,y) \qquad p(x,y) \qquad e_{ref}(x,y)$

# FIG. 6

FIG. 7a

FIG. 7b

FIG. 7c

FIG. 8

# EP 1 881 454 A1

**European Patent Office**

## EUROPEAN SEARCH REPORT

Application Number

EP 06 01 4801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | LIYUAN LI ET AL: "Integrating Intensity and Texture Differences for Robust Change Detection" IEEE TRANSACTIONS ON IMAGE PROCESSING, IEEE SERVICE CENTER, PISCATAWAY, NJ, US, vol. 11, no. 2, February 2002 (2002-02), XP011025895 ISSN: 1057-7149 Sections I, II, III.B | 1-62 | INV. G06T7/20 |
| A | CROUZIL A ET AL: "A new correlation criterion based on gradient fields similarity" PROCEEDINGS OF THE 13TH INTERNATIONAL CONFERENCE ON PATTERN RECOGNITION IEEE COMPUT. SOC. PRESS LOS ALAMITOS, CA, USA, vol. 1, 1996, pages 632-636 vol.1, XP002419454 ISBN: 0-8186-7282-X * abstract * Section 4 and subsections | 6,23-26, 36,53-56 | |
| A | US 2005/271302 A1 (KHAMENE ALI [US] ET AL) 8 December 2005 (2005-12-08) * paragraphs [0061] - [0075] * | 6,23-26, 36,53-56 | TECHNICAL FIELDS SEARCHED (IPC) G06T |
| A | FORD R M ET AL: "Metrics for shot boundary detection in digital video sequences" MULTIMEDIA SYSTEMS SPRINGER-VERLAG GERMANY, vol. 8, no. 1, January 2000 (2000-01), pages 37-46, XP002419455 ISSN: 0942-4962 Sections 3.3, 3.4, 3.5 | | |

The present search report has been drawn up for all claims

| Place of search | Date of completion of the search | Examiner |
|---|---|---|
| The Hague | 9 February 2007 | ALMEIDA GARCIA, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 01 4801

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2007

| Patent document cited in search report | Publication date | Patent family member(s) | Publication date |
|---|---|---|---|
| US 2005271302 A1 | 08-12-2005 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020030739 A
- US 20010004400 A
- US 20050259870 A
- US 6044166 A

### Non-patent literature cited in the description

- **SEN-CHING S. CHEUNG ; CHANDRIKA KAMATH.** Robust techniques for background subtraction in urban traffic video. *IS&T/SPIE's Symposium on Electronic Imaging,* 18 January 2004
- **C. STAUFFER ; W.E.L. GRIMSON.** Adaptive background mixture models for real-time tracking. *Proc. IEEE Conf. on Computer Vision and Pattern Recognition,* 1999, 246-252
- **ISMAIL HARITAOGLU ; DAVID HARWOOD ; LARRY S. DAVIS.** W4: Real-Time Surveillance of People and Their Activities. *IEEE Trans. on Pattern Analysis and Machine Intelligence,* August 2000, vol. 22 (8), 809-830
- **OMAR JAVED ; KHURRAM SHAFIQUE ; MUBARAK SHAH.** A Hierarchical Approach to Robust Background Subtraction using Color and Gradient Information. *Proc. IEEE Workshop on Motion and Video Computing,* 05 December 2002
- **EMRULLAH DURUCAN ; TOURADJ EBRAHIMI.** Change Detection and Background Extraction by Linear Algebra. *Proc. of the IEEE,* October 2001, vol. 89 (10), 1368-1381
- **TAKASHI MATSUYAMA ; TAKASHI OHYA ; HITOSHI HABE.** Background Subtraction for Non-Stationary Scenes. *Proc. 4th Asian Conference on Computer Vision,* 2000, 662-667
- **LIYUAN LI ; MAYLOR K. H. LEUNG.** Integrating Intensity and Texture Differences for Robust Change Detection. *IEEE Trans. Image Processing,* February 2002, vol. 11 (2), 105-112
- **P. VIOLA ; M. JONES.** Rapid object detection using a boosted cascade of simple features. *Proc. IEEE Conference on Computer Vision and Pattern Recognition,* December 2001
- **F. CROW.** Summed-area tables for texture mapping. *Proc. SIGGRAPH,* 1984, vol. 18 (3), 207-212
- Digital Image Processing. Practice-Hall, 2003, 519-560